# EUROPÄISCHE PATENTANMELDUNG

(11) **EP 4 159 586 A1**
(43) Veröffentlichungstag der Anmeldung: **05.04.2023**
(21) Anmeldenummer: 22197620.2
(22) Anmeldetag: 26.09.2022
(51) Int. Cl.: B62D 1/02, B60N 2/75, G05G 1/10

(54) **VORRICHTUNG FÜR FAHRZEUGE ZUR DURCHFÜHRUNG EINER LENKBEWEGUNG**

(30) Priorität: 30.09.2021 DE 102021125464; 16.12.2021 DE 102021133430
(71) Anmelder: GRAMMER AG, 92289 Ursensollen (DE)
(72) Erfinder: Kolb, Jens, 92281 Königstein (DE); Bayani, Iman, 92245 Kümmersbruck (DE); Schneider, Florian, 92224 Amberg (DE); Krivenkov, Konstantin, 92224 Amberg (DE)
(74) Vertreter: Hannke, Christian

(57) **Zusammenfassung**

Die Erfindung betrifft eine Vorrichtung (1) für Fahrzeuge, insbesondere Gabelstapler, wobei die Vorrichtung (1) zumindest zur Durchführung einer Lenkbewegung des Fahrzeugs ausgebildet ist, wobei die Vorrichtung (1) an einer Armlehne (2) eines Fahrzeugsitzes des Fahrzeugs angeordnet ist, wobei eine Betätigung der Vorrichtung (1) die Lenkbewegung verursacht, und wobei die Vorrichtung (1)
- ein erstes oberhalb der Armlehne (2) angeordnetes Vorrichtungselement (4), und
- ein zweites Vorrichtungselement (5), welches an dem ersten Vorrichtungselement fest verbunden ist und sich von dem ersten Vorrichtungselement (4) über das erste Vorrichtungselement (4) hinaus nach unten erstreckt,
umfasst, wobei das erste Vorrichtungselement (4) und das zweite Vorrichtungselement (5) dazu vorgesehen und ausgebildet sind, dass eine Hand zumindest teilweise darauf ablegbar ist, wobei bei einer Vorwärtsbewegung des Fahrzeugs die Hand zumindest teilweise auf dem ersten Vorrichtungselement (4) ablegbar ist und bei einer Rückwärtsbewegung des Fahrzeugs die Hand auf dem zweiten Vorrichtungselement (5) zumindest teilweise ablegbar ist.

## Beschreibung

Die Erfindung betrifft eine Vorrichtung für Fahrzeuge, insbesondere Gabelstapler, wobei die Vorrichtung zumindest zur Durchführung einer Lenkbewegung des Fahrzeugs ausgebildet ist, wobei die Vorrichtung an einer Armlehne eines Fahrzeugsitzes des Fahrzeugs angeordnet ist, gemäß dem Oberbegriff des Patentanspruches 1.

Es gibt eine Vielzahl verschiedenster Vorrichtungen zum Durchführen einer Lenkbewegung, auch als Lenkvorrichtung bekannt, auch für Gabelstapler. Üblicherweise werden bisher normale Lenkräder verwendet, die vor dem Fahrzeugsitz angeordnet sind und dem Fahrzeugführer aufgrund ihrer Position die Freisicht zu der zu befördernden Ware auf den Gabeln des Gabelstaplers nimmt. Hierbei spielt es auch eine wesentliche Rolle, dass häufig zusätzlich zu dem Lenkrad, noch das Armaturenbrett im vorderen Bereich angeordnet ist. Wäre beides nicht vorhanden, so könnte der Gabelstaplerfahrer ohne Probleme die niedrig angeordnete Ware bzw. die auf den Gabeln positionierte Fracht betrachten und somit ein sichereres Fahren und Befördern der Fracht samt der Palette sicherstellen. Dies ist häufig bisher mit dem Umstand verbunden, dass der Fahrer aus dem Fahrzeugsitz sich erheben muss bzw. sich nach vorne beugen muss, um ein sauberes Aufnehmen der Palette oder eines anderen Gegenstandes mit den Gabeln sicherzustellen.

Auch sind Lenkvorrichtungen bekannt, welche mit dem Fahrzeugsitz verbunden sind. Diese haben jedoch einen entscheidenden ergonomischen Nachteil, wenn sich der Fahrer auf dem Fahrzeugsitz nach hinten dreht, beispielsweise bei einer Rückwärtsfahrt, um den rückwärtigen Fahrbereich einsehen zu können.

Aufgrund des Körperaufbaus des Fahrers tendiert bei einer Verdrehung des Körpers die Hand, welche die Lenkbewegung mittels der Lenkvorrichtung steuern soll, sich gegenüber der Vorrichtung zu verdrehen und die Lenkvorrichtung ist nicht mehr gut und sicher bedienbar. Wird etwa die Lenkvorrichtung mit der linken Hand bedient, so ist eine Drehung des Körpers im Uhrzeigersinn vorgesehen, um den rückwärtigen Bereich einsehen zu können. Entsprechend verdreht sich die Hand des Fahrers, so dass die Hand sich gegenüber der Vorrichtung verlagert.

Somit ist es Aufgabe der Erfindung, eine Vorrichtung zur Durchführung einer Lenkbewegung für Fahrzeuge zur Verfügung zu stellen, die sowohl eine freie Sicht des Fahrzeugführers auf den Bereich vor dem Fahrzeug, insbesondere im Bodenbereich des Fahrzeuges, als auch eine komfortable Bedienung einer Lenkvorrichtung des Fahrzeuges unabhängig von einer momentanen Drehstellung des Körpers des Fahrers sicherzustellen.

Diese Aufgabe wird von einer Vorrichtung mit den Merkmalen des Anspruches 1 gelöst.

Kerngedanke der Erfindung ist es, dass eine Vorrichtung für Fahrzeuge, insbesondere Gabelstapler, vorgesehen ist, wobei die Vorrichtung zumindest zur Durchführung einer Lenkbewegung des Fahrzeuges ausgebildet ist, wobei die Vorrichtung an einer Armlehne eines Fahrzeugsitzes des Fahrzeuges angeordnet ist, und wobei die Vorrichtung um eine erste Drehachse drehbar gegenüber der Armlehne ist, wobei eine Drehung der Vorrichtung um die erste Drehachse die Lenkbewegung verursacht, und wobei die Vorrichtung
- ein erstes oberhalb der Armlehne angeordnetes Vorrichtungselement, und
- ein zweites Vorrichtungselement, welches an dem ersten Vorrichtungselement fest verbunden ist und sich von dem ersten Vorrichtungselement über das erste Vorrichtungselement hinaus nach unten erstreckt,
umfasst.

Dies bedeutet, dass bei einer Drehung der Vorrichtung um die Drehachse sowohl das erste Vorrichtungselement, als auch das zweite Vorrichtungselement um die Drehachse gedreht werden, da die Vorrichtungselemente fest beziehungsweise starr miteinander verbunden sind. Besonders bevorzugt ist die Verbindung zwischen den Vorrichtungselementen lösbar ausgebildet, wobei es auch denkbar ist, dass die Vorrichtungselemente derart miteinander verbunden sind, dass nur eine Beschädigung der Vorrichtung zu einem Lösen der Vorrichtungselemente führen würde.

Vorzugsweise ist die Vorrichtung an einer linken Armlehne angeordnet, da häufig an der rechten Armlehne ein Joystick vorgesehen ist, der verschiedene weitere Funktionen, wie beispielweise das Bedienen der Gabeln eines Gabelstaplers als Aufgabe hat. Denkbar ist auch, dass die Vorrichtung an der rechten Armlehne angeordnet ist und an der linken Armlehne der Joystick vorgesehen ist.

Erfindungsgemäß ist es vorgesehen, dass das erste Vorrichtungselement oberhalb der Armlehne angeordnet ist. Besonders bevorzugt weist die Armlehne eine obere Oberfläche auf, so dass das erste Vorrichtungselement oberhalb dieser oberen Oberfläche angeordnet ist.

Unabhängig davon, ob die Vorrichtung an der linken Armlehne oder rechten Armlehne angeordnet ist, ist es bevorzugt vorgesehen, dass das zweite Vorrichtungselement an einer Innenseite der Armlehne angeordnet ist, also der Seite, welche dem Fahrer zugewandt ist.

Gemäß einer besonders bevorzugten Ausführungsform ist es vorgesehen, dass das erste Vorrichtungselement und das zweite Vorrichtungselement dazu vorgesehen und ausgebildet sind, dass die Hand zumindest teilweise darauf ablegbar ist, wobei bei einer Vorwärtsbewegung des Fahrzeuges die Hand zumindest teilweise auf dem ersten Vorrichtungselement ablegbar ist und bei einer Rückwärtsbewegung des Fahrzeuges die Hand auf dem zweiten Vorrichtungselement zumindest teilweise ablegbar ist.

Das erste Vorrichtungselement umfasst eine erste Handauflagefläche, welche von einer Innenhandfläche und den Fingern der Hand zumindest teilweise bedeckt werden kann, sodass ein feinfühliges nach links und rechts Drehen der Vorrichtung um die Drehachse zu einer Lenkbewegung des Fahrzeuges führt.

Das zweite Vorrichtungselement umfasst eine zweite Handauflagefläche, welche von einer Innenhandfläche und den Fingern der Hand zumindest teilweise bedeckt werden kann, sodass ein feinfühliges nach links und rechts Drehen der Vorrichtung um die Drehachse zu einer Lenkbewegung des Fahrzeuges führt.

Besonders bevorzugt ist die erste Handauflagefläche in eine Erstreckungsrichtung der Armlehne, zumindest in einer Nullstellung der Vorrichtung, erstreckend ausgebildet, wobei bevorzugt die zweite Handauflagefläche im Wesentlichen senkrecht oder in einem spitzen Winkel zu der Erstreckungsrichtung der Armlehne erstreckend ausgebildet ist.

Die Handauflageflächen sind bevorzugt zumindest teilweise an die Form und Ausgestaltung der Hand angepasst.

Gemäß einer bevorzugten Ausführungsform ist es vorgesehen, dass die Vorrichtung um einen Drehwinkel von bis 40° nach links und nach rechts drehbar ist, bevorzugter bis zu 30° und weiter bevorzugt bis zu 20°. Dadurch, dass sich das zweite Vorrichtungselement von dem ersten Vorrichtungselement über das zweite Vorrichtungselement nach unten erstreckt, also in den Bereich der Armlehne hinein, ist die Auslegung des Drehwinkels der Vorrichtung entsprechend anzupassen, da ansonsten die Armlehne die Drehbewegung der Vorrichtung behindern könnte. Alternativ oder kumulativ kann die Armlehne entsprechend angepasst sein, um gewisse Drehwinkel zu ermöglichen.

Besonders bevorzugt ist eine Lenkübersetzung vom Drehwinkel der Vorrichtung zu einem Lenkwinkel des Fahrzeuges, etwa der Lenkung oder der Reifen. Weiter bevorzugt ist die Lenkungsübersetzung progressiv ausgelegt, das heißt, dass die Übersetzung von Drehwinkel zu Lenkwinkel sich über den Drehwinkelbereich überproportional verändert.

Die progressive Auslegung hat unter anderem den Vorteil, dass bei relativ kleinen Drehwinkeln geringe Änderungen des Lenkwinkels die Folge sind, so dass das Fahrzeug sehr präzise gelenkt werden kann, beispielsweise, um mit einer Gabel des Gabelstaplers eine Palette aufnehmen zu können.

Gemäß einer bevorzugten Ausführungsform ist es vorgesehen, dass die erste Drehachse in einer Höhenrichtung oder in einem spitzen Winkel zu der Höhenrichtung verlaufend angeordnet ist. Die erste Drehachse kann gemäß weiterer Ausführungsformen auch in jede Richtung, also nach vorne und zur Seite hin geschwenkt werden, um gegebenenfalls ein komfortableres Bedienen in Abhängigkeit von der Handstellung der Personen zu deren Arm zu ermöglichen.

Die Vorrichtung kann gemäß einer bevorzugten Ausführungsform insgesamt oder auch nur in Teilen gegenüber der Armlehne höhenverstellbar sein, bevorzugt in Richtung der ersten Drehachse, sodass die Vorrichtung und die Armlehne gegenüber den physischen Erfordernissen des Fahrers angepasst werden kann.

Gemäß einer bevorzugten Ausführungsform ist es vorgesehen, dass eine Rückstelleinheit vorgesehen ist, welche die Vorrichtung in eine Nullstellung rückstellt. Die Nullstellung kann beispielsweise über einen Drehwinkel von 0° dargestellt sein.

Beispielsweise kann die gedrehte Vorrichtung mittels einer entsprechenden Rückstellfeder oder dergleichen mit einer Rückstellkraft beaufschlagt werden, sodass die Vorrichtung beim Loslassen bzw. Abheben der Hand beziehungsweise der Finger automatisch in die Nullstellung gedreht wird.

Besonders bevorzugt kann es vorgesehen sein, dass die Rückstelleinheit, beispielsweise die Rückstellfeder, progressiv ausgelegt ist, das heißt, dass bei größeren Drehwinkeln überproportional mehr Gegenkraft bzw. Rückstellkraft wirkt.

Gemäß einer weiteren bevorzugten Ausführungsform ist es vorgesehen, dass bei Erreichen der Nullstellung der Vorrichtung ein haptisches Signal ausgebbar ist. Bevorzugt kann es vorgesehen sein, dass bei der Nullstellung der Vorrichtung ein haptisches Signal ausgebbar ist.

Denkbar sind auch akustische Signale oder optische Signale. Auch jede Kombination ist denkbar.

Die Ausgabe eines entsprechenden Signals, dass die Vorrichtung der Nullstellung erreicht hat oder die Vorrichtung in der Nullstellung ist, kann insbesondere für einen Fahrer beim Rückwärtsfahren hilfreich sein, wenn die Vorrichtung nicht im Blickfeld des Fahrers ist.

Außerdem kann die Vorrichtung bei einer Drehung auch mit einer Dämpfungskraft beaufschlagt sein. Dies kann mittels Rotationsdämpfern oder dergleichen erreicht werden, sodass eine nicht zu abrupte und starke Lenkbewegung innerhalb einer kurzen Zeit möglich ist.

Gemäß einer besonders bevorzugten Ausführungsform ist es vorgesehen, dass die Drehbewegung der Vorrichtung mit einer Gegenkraft beaufschlagbar ist. Die Gegenkraft ist dabei bevorzugt derart, dass die Gegenkraft der Rückstellung der Vorrichtung entgegenwirkt, so dass die Rückstellung der Vorrichtung nicht zu abrupt erfolgt oder sogar mehrmals hin- und herbewegt. Die Gegenkraft kann bevorzugt linear oder progressiv über den Drehwinkel ausgelegt sein. Besonders bevorzugt ist bei kleinen Drehwinkeln eine geringe Gegenkraft vorgesehen. Weiter bevorzugt ist die Gegenkraft an die Rückstellkraft angepasst, das heißt beispielsweise, dass wenn hohe Rückstellkräfte wirken, entsprechend eine höhere Gegenkraft vorgesehen ist.

Gemäß einer weiteren bevorzugten Ausführungsform ist es vorgesehen, dass an dem ersten Vorrichtungselement erste Funktionstasten und -anzeigen und an dem zweiten Vorrichtungselement zweite Funktionstasten und -anzeigen angeordnet sind.

Hier können die Funktionstasten und -anzeigen beispielweise weitere Fahrzeugfunktionen, wie Lichtfunktion, Blinkfunktion, Parkfunktion, Hupfunktion und dergleichen entsprechen.

Verschiedene weitere Sensoren und Aktoren in passiver oder aktiver Form könnten ebenso durch entsprechende angeordnete Schalter an der Vorrichtung bedient werden oder auch nur in ihrer Funktion durch Kontrollleuchten angezeigt werden. Ebenso ist ein Wechsel von einem Vorwärts- auf ein Rückwärtsfahren mittels einer kleinen Fingerbewegung aufgrund derartiger Betätigungselemente an der Lenkvorrichtung denkbar. Eben weiterhin kann ein Wechsel von einem schnellen auf ein langsames Fahren denkbar sein. Auch der Batteriezustand könnte ebenso wie die aktive Zündung angezeigt werden. Zusammengefasst ist somit festzustellen, dass eine Vielzahl an Funktionstasten und Funktionsanzeigen in einer derartigen innovativen Lenkvorrichtung angeordnet werden können, wobei all diese weiteren Funktionen als Merkmale eines Armaturenbrettes wegfallen würden, sodass sich ein Armaturenbrett, ebenso wie ein Lenkrad erübrigen würde. Auch dies stellt somit eine freie Sicht zu den Gabeln eines Gabelstaplers und allgemein zu dem Bodenbereich vor einem Fahrzeug zur Verführung.

Besonders bevorzugt ist es vorgesehen, dass zumindest eine Funktion der Funktionstasten und -anzeigen des ersten Vorrichtungselementes und des zweiten Vorrichtungselementes gleich ist und wobei weiter bevorzugt die Funktionstasten und -anzeigen des ersten Vorrichtungselementes nur bei einer Vorwärtsbewegung und die Funktionstasten und -anzeigen des zweiten Vorrichtungselements nur bei einer Rückwärtsbewegung aktiv sind.

Weiter bevorzugt ist eine Erkennungseinheit vorgesehen, welche vorgesehen ist, eine Vorwärtsbewegung und eine Rückwärtsbewegung zu erkennen. Bevorzugt werden mittels der Erkennungseinheit die entsprechenden Funktionstasten und -anzeigen aktiviert, beziehungsweise deaktiviert. Hiermit kann eine unbeabsichtigte Betätigung vermieden werden.

Gelöst wird die zugrunde liegende Aufgabe auch von einer Vorrichtung für Fahrzeuge, insbesondere Gabelstapler, wobei die Vorrichtung zumindest zur Durchführung einer Lenkbewegung des Fahrzeuges ausgebildet ist, wobei die Vorrichtung an einer Armlehne eines Fahrzeugsitzes des Fahrzeuges angeordnet ist, wobei die Vorrichtung um eine erste Drehachse drehbar gegenüber der Armlehne ist, wobei eine Drehung der Vorrichtung mit einem Drehwinkel um die erste Drehachse die Lenkbewegung um einen Lenkwinkel verursacht, wobei die Lenkungsübersetzung von Drehwinkel zu Lenkwinkel progressiv ausgelegt ist.

Besonders bevorzugt ist die Lenkungsübersetzung über den gesamten Drehwinkelbereich progressiv ausgelegt.

Die zugrunde liegende Aufgabe wird ebenso gelöst von einer Vorrichtung für Fahrzeuge, wobei die Vorrichtung zumindest zur Durchführung einer Lenkbewegung des Fahrzeugs ausgebildet ist, wobei die Vorrichtung an einer Armlehne eines Fahrzeugsitzes des Fahrzeugs angeordnet ist, wobei die Vorrichtung mindestens ein drehbares Radelement umfasst, welches umfangseitig von Fingern einer auf der Vorrichtung abgelegten Hand des Fahrzeugführers zumindest teilweise umfassbar ist und für eine Lenkbewegung um eine erste Drehachse gedreht werden kann, wobei an dem Radelement ein zweites Vorrichtungselement fest verbunden ist und sich von dem Radelement über das Radelement hinaus nach unten erstreckt.

Zudem ist die Vorrichtung derart vorteilhaft ausgebildet, dass sie von oben in ihrer Ausbildung, vorzugsweise knaufartig, mit einer Innenhandfläche einer Hand bedeckt werden kann und die nach unten weisenden Finger das Radelement umfassen, sodass ein feinfühliges nach links und rechts Drehen des Rades zu einer Lenkbewegung des Fahrzeuges führt. Die Vorrichtung weist daher eine erste Handauflagefläche auf, wobei bevorzugt die erste Handauflagefläche zumindest teilweise oder vollständig oberhalb des Radelements angeordnet ist.

Hierfür sind die Finger mit oder ohne Daumen einer linken Hand an dem Außenumfang des Radelementes angeordnet und können durch Ablage der Hand freibeweglich das Radelement drehen. Allerdings ist hierbei zu beachten, dass die Innenhandfläche der Hand auf einem stationären Kopfteil angeordnet ist, welches sich nicht mit dem Radelement mitbewegt.

Das Radelement passt sich bei einer entsprechenden Ausbildung zusammen mit dem knaufartigen Kopfteil und einem darunter angeordneten Basisteil ergonomisch angenehm einer gewölbten Innenhand an und ermöglicht hierdurch ein entspanntes Verdrehen des Radelementes und damit einen sensiblen Lenkvorgang durch geringes Bewegen der Finger dieser Hand.

Das um die Drehachse drehbare Radelement ist vorzugsweise horizontal ausgerichtet, welches bedeutet, dass die Drehachse vorzugsweise vertikal ausgerichtet ist. Jedoch kann diese Achse gemäß weiterer Ausführungsformen auch in jede Richtung, also nach vorne und zur Seite hin geschwenkt werden, um gegebenenfalls ein komfortableres Bedienen in Abhängigkeit von der Handstellung der Personen zu deren Arm zu ermöglichen.

Oberhalb des Randelementes ist das bereits erwähnte knaufartige Kopfteil, welches stationär an der Lenkvorrichtung angeordnet ist und zur Ablage der Innenhandfläche der Hand dient und die erste Handauflagefläche ausbildet. Dieses Kopfteil ist ergonomisch vorteilhaft ausgebildet, sodass es sich in eine Innenhandfläche der Hand gut einpasst. Es kann vorzugsweise auch höhenverstellbar sein, um die nach unten ragenden Finger derart zum Radelement zu beabstanden, dass nur die Endbereiche der Finger das Radelement umfassen.

Das Kopfteil kann insgesamt oder auch nur in Teilen höhenverstellbar sein, sodass zum Beispiel ein oberer Deckel des Kopfteils nach oben gefahren werden kann, woraus sich unter anderem eine aktive Belüftung um den gesamten oberen Funktionsblock bzw. eine Haube ergeben kann. Denn zwischen Deckel und restlichem Kopfteil würde ein Spalt entstehen, der von innen heraus auch eine Belüftung gegenüber der Hand durch inneres Zuführen von Luft ermöglichen würde. Diese Luft würde über den gesamten Umfang des Kopfteils hinweg nach unten über das Radelement und das darunter liegende Basisteil strömen und somit auch ein Abrutschen eventuell feuchter Finger an dem Radelement verhindern.

Die Vorrichtung an sich, die vorzugsweise im vorderen Bereich der Armlehne angeordnet ist, vor einer vorzugsweise baulich üblichen Armlehne, kann zu der restlichen Armlehne hin auch vorteilhaft in ihrem Abstand variiert werden. Dies hat zur Folge, dass ein Benutzer seinen Arm in der üblichen Weise auf der Armlehne ablegen kann und dies das knopfartige Kopfteil zusammen mit der restlichen Lenkvorrichtung derart zur Armlehne beabstandet, dass die Lenkvorrichtung mit dem richtigen Abstand zu dem restlichen Unterarm optimal in der Innenhandfläche liegt.

Unterhalb des Radelements ist das bereits erwähnte gegenüber der Armlehne stationär angeordnete Basisteil, welches mit zumindest teilweise integrierten ersten Funktionstasten und -anzeigen ausgestattet ist. Derartige Funktionstasten und -anzeigen können auch im knaufartigen Kopfteil als weitere Funktionstasten und -anzeigen vorhanden sein. Hier können auch beispielweise weitere Fahrzeugfunktionen, wie Lichtfunktion, Blinkfunktion, Parkfunktion, Hupfunktion und dergleichen vorhanden sein. Verschiedene weitere Sensoren und Aktoren in passiver oder aktiver Form könnten ebenso durch entsprechend angeordnete Schalter an dem Kopfteil- oder dem Basisteil bedient werden oder auch nur in ihrer Funktion durch Kontrollleuchten angezeigt werden.

Ebenso ist ein Wechsel von einem Vorwärts- auf ein Rückwärtsfahren mittels einer kleinen Fingerbewegung aufgrund derartiger Betätigungselemente an der Lenkvorrichtung denkbar. Eben weiterhin kann ein Wechsel von einem schnellen auf ein langsames Fahren denkbar sein. Auch der Batteriezustand könnte ebenso wie die aktive Zündung angezeigt werden. Zusammengefasst ist somit festzustellen, dass eine Vielzahl an Funktionstasten und Funktionsanzeigen in einer derartigen innovativen Lenkvorrichtung angeordnet werden können, wobei all diese weiteren Funktionen als Merkmale eines Armaturenbrettes wegfallen würden, sodass sich ein Armaturenbrett, ebenso wie ein Lenkrad erübrigen würde. Auch dies stellt somit eine freie Sicht zu den Gabeln eines Gabelstaplers und allgemein zu dem Bodenbereich vor einem Fahrzeug zur Verführung.

Das Radelement ist vorteilhaft umfangsseitig mit Fingerrillen ausgestattet, sodass ein Abrutschen der Fingerspitzen bzw. der Endbereiche der Finger, die von oben herabkommend das Rad umgreifen, nicht möglich ist. Ebenso ist ein feinfühligeres Drehen des Rades möglich.

Das Kopfteil, das Basisteil und das Radelement sind vorzugsweise zumindest teilweise kreisförmig ausgebildet, um so eine ergonomisch komfortable Form für eine Innenseite einer Hand zu ermöglichen.

Die Lenkvorrichtung ist in Fahrzeugrichtung mit Fahrzeugsitzrichtung betrachtet vor der Armlehne oder auf der Armlehne angeordnet und gegenüber einer Längsachse der Armlehne bezüglich einer Sitzfläche des Fahrzeugsitzes um einen Winkel nach außen schwenkbar. Dies entspricht einer ergonomisch entspannten vorteilhaften Haltung der Hand gegenüber dem restlichen Unterarm.

Das Kopf- und Basisteil kann rückseitig zur Armlehne hin für eine bessere Auflage der Handfläche verlängert ausgebildet sein. Dies bedeutet, dass im hinteren Bereich des Kopf- und Basisteiles diese beiden Teile nicht mehr kreisförmig, beziehungsweise rund ausgebildet sind, sondern eine wulstartige Verlängerung haben, die sich besonders angenehm für die abgelegte Innenhand eines Benutzers aufgrund der Ergonomie einer Innenhandfläche auswirkt.

Erfindungsgemäß durch die feste Verbindung zwischen dem Radelement und dem zweiten Vorrichtungselement ist es vorgesehen, dass bei einer Drehung des Radelements um die Drehachse auch das zweite Vorrichtungselement um die Drehachse gedreht wird, da das Radelement und das zweite Vorrichtungselement fest beziehungsweise starr miteinander verbunden sind. Besonders bevorzugt ist die Verbindung lösbar ausgebildet, wobei es auch denkbar ist, dass die Verbindung derart ist, dass nur eine Beschädigung der Vorrichtung zu einem Lösen der Vorrichtungselemente führen würde.

Erfindungsgemäß ist es vorgesehen, dass das Radelement oberhalb der Armlehne angeordnet ist. Besonders bevorzugt weist die Armlehne eine obere Oberfläche auf, so dass das Radelement oberhalb dieser oberen Oberfläche angeordnet ist.

Unabhängig davon, ob die Vorrichtung an der linken Armlehne oder rechten Armlehne angeordnet ist, ist es bevorzugt vorgesehen, dass das zweite Vorrichtungselement an einer Innenseite der Armlehne angeordnet ist, also der Seite, welche dem Fahrer zugewandt ist.

Das zweite Vorrichtungselement umfasst eine zweite Handauflagefläche, welche von einer Innenhandfläche und den Fingern der Hand zumindest teilweise bedeckt werden kann, sodass ein feinfühliges nach links und rechts Drehen der Vorrichtung um die Drehachse zu einer Lenkbewegung des Fahrzeuges führt.

Bevorzugt ist die zweite Handauflagefläche im Wesentlichen senkrecht oder in einem spitzen Winkel zu der Erstreckungsrichtung der Armlehne erstreckend ausgebildet ist. Die Handauflageflächen sind bevorzugt zumindest teilweise an die Form und Ausgestaltung der Hand angepasst.

Gemäß einer bevorzugten Ausführungsform ist es vorgesehen, dass die Vorrichtung um einen Drehwinkel von bis 40° nach links und nach rechts drehbar ist, bevorzugter bis zu 30° und weiter bevorzugt bis zu 20° oder bis zu 15°. Dadurch, dass sich das zweite Vorrichtungselement von dem Radelement über das Radelement nach unten erstreckt, also in dem Bereich der Armlehne hinein oder sogar darüber hinaus, ist die Auslegung des Drehwinkels der Vorrichtung entsprechend anzupassen, da ansonsten die Armlehne die Drehbewegung des Radelements behindern könnte. Alternativ oder kumulativ kann die Armlehne entsprechend angepasst sein, um gewisse Drehwinkel zu ermöglichen.

Besonders bevorzugt ist eine Lenkübersetzung von Drehwinkeln des Radelements zu einem Lenkwinkel des Fahrzeuges, etwa der Lenkung oder der Reifen. Weiter bevorzugt ist die Lenkungsübersetzung progressiv ausgelegt, das heißt, dass die Übersetzung von Drehwinkel zu Lenkwinkel sich über den Drehwinkelbereich überproportional verändert.

Die progressive Auslegung hat unter anderem den Vorteil, dass bei relativ kleinen Drehwinkeln geringe Änderungen des Lenkwinkels die Folge sind, so dass das Fahrzeug sehr präzise gelenkt werden kann, beispielsweise, um mit einer Gabel des Gabelstaplers eine Palette aufnehmen zu können.

Gemäß einer bevorzugten Ausführungsform ist es vorgesehen, dass die Drehachse in einer Höhenrichtung oder in einem spitzen Winkel zu der Höhenrichtung verlaufend angeordnet ist. Die erste Drehachse kann gemäß weiterer Ausführungsformen auch in jede Richtung, also nach vorne und zur Seite hin geschwenkt werden, um gegebenenfalls ein komfortableres bedienen in Abhängigkeit von der Handstellung der Personen zu deren Arm zu ermöglichen.

Gemäß einer bevorzugten Ausführungsform ist es vorgesehen, dass eine Rückstelleinheit vorgesehen ist, welche die Vorrichtung bzw. das Radelement in eine Nullstellung rückstellt. Die Nullstellung kann beispielsweise über einen Drehwinkel von 0° dargestellt sein.

Beispielsweise kann das gedrehte Radelement mittels einer entsprechenden Rückstellfeder oder dergleichen mit einer Rückstellkraft beaufschlagt werden, sodass die Vorrichtung beim Loslassen bzw. Abheben der Hand beziehungsweise der Finger automatisch in die Nullstellung gedreht wird.

Besonders bevorzugt kann es vorgesehen sein, dass die Rückstelleinheit, beispielsweise die Rückstellfeder, progressiv ausgelegt ist, das heißt, dass bei größeren Drehwinkeln überproportional mehr Gegenkraft bzw. Rückstellkraft wirkt.

Gemäß einer weiteren bevorzugten Ausführungsform ist es vorgesehen, dass bei Erreichen der Nullstellung der Vorrichtung bzw. des Radelements ein haptisches Signal ausgebbar ist. Bevorzugt kann es vorgesehen sein, dass bei der Nullstellung der Vorrichtung bzw. des Radelements ein haptisches Signal ausgebbar ist.

Denkbar sind auch akustische Signale oder optische Signale. Auch jede Kombination ist denkbar.

Die Ausgabe eines entsprechenden Signals, dass die Vorrichtung bzw. das Radelement die Nullstellung erreicht hat oder in der Nullstellung ist, kann insbesondere für einen Fahrer beim Rückwärtsfahren hilfreich sein, wenn die Vorrichtung nicht im Blickfeld des Fahrers ist.

Außerdem kann die Vorrichtung bei einer Drehung auch mit einer Dämpfungskraft beaufschlagt sein. Dies kann mittels Rotationsdämpfern oder dergleichen erreicht werden, sodass eine nicht zu abrupte und starke Lenkbewegung innerhalb einer kurzen Zeit möglich ist.

Gemäß einer besonders bevorzugten Ausführungsform ist es vorgesehen, dass die Drehbewegung des Radelements mit einer Gegenkraft beaufschlagbar ist. Die Gegenkraft ist dabei bevorzugt derart, dass die Gegenkraft der Rückstellung der Vorrichtung bzw. des Radelements entgegenwirkt, so dass die Rückstellung nicht zu abrupt erfolgt oder sogar mehrmals hin- und herbewegt. Die Gegenkraft kann bevorzugt linear oder progressiv über den Drehwinkel ausgelegt sein. Besonders bevorzugt ist bei kleinen Drehwinkeln eine geringe Gegenkraft vorgesehen. Weiter bevorzugt ist die Gegenkraft an die Rückstellkraft angepasst, das heißt beispielsweise, dass wenn hohe Rückstellkräfte wirken, entsprechend eine höhere Gegenkraft vorgesehen ist.

Gemäß einer weiteren bevorzugten Ausführungsform ist es vorgesehen, dass an dem zweiten Vorrichtungselement weitere Funktionstasten und -anzeigen angeordnet sind.

Hier können die Funktionstasten und -anzeigen beispielweise weitere Fahrzeugfunktionen, wie Lichtfunktion, Blinkfunktion, Parkfunktion, Hupfunktion und dergleichen entsprechen, wie sie bereits auch anderweitig angeordnet sind. Hierdurch ist es möglich, dass bei einer Rückwärtsfahrt diese Funktionen entsprechend leicht betätigt werden können, obwohl sich die Hand gegenüber der Vorrichtung bewegt.

Besonders bevorzugt ist es vorgesehen, dass zumindest eine Funktion der Funktionstasten und -anzeigen der Vorrichtung ohne zweites Vorrichtungselement und des zweiten Vorrichtungselementes gleich sind und wobei weiter bevorzugt die Funktionstasten und -anzeigen der Vorrichtung nur bei einer Vorwärtsbewegung und die Funktionstasten und -anzeigen des zweiten Vorrichtungselements nur bei einer Rückwärtsbewegung aktiv sind.

Weiter bevorzugt ist eine Erkennungseinheit vorgesehen, welche vorgesehen ist, eine Vorwärtsbewegung und eine Rückwärtsbewegung zu erkennen. Bevorzugt werden mittels der Erkennungseinheit die entsprechenden Funktionstasten und -anzeigen aktiviert, beziehungsweise deaktiviert. Hiermit kann eine unbeabsichtigte Betätigung vermieden werden.

Gelöst wird die zugrunde liegende Aufgabe weiter von einer Vorrichtung für Fahrzeuge, wobei die Vorrichtung zumindest zur Durchführung einer Lenkbewegung des Fahrzeugs ausgebildet ist, wobei die Vorrichtung an einer Armlehne eines Fahrzeugsitzes des Fahrzeugs angeordnet ist, wobei die Vorrichtung
- ein erstes oberhalb der Armlehne angeordnetes Vorrichtungselement, und
- ein zweites Vorrichtungselement, welches an dem ersten Vorrichtungselement fest verbunden ist und sich von dem ersten Vorrichtungselement über das erste Vorrichtungselement hinaus nach unten erstreckt,
umfasst, wobei die Vorrichtung im Wesentlichen starr gegenüber der Armlehne angeordnet ist und mittels einer Krafteinwirkung und/oder einer Drehmomenteinwirkung auf die Vorrichtung eine Lenkbewegung des Fahrzeugs hervorrufbar ist.

Im Wesentlichen ist hierbei derart zu verstehen, dass keine oder nur eine sehr geringe Drehung der Vorrichtung vorgesehen ist. Die maximale Drehung überschreitet 10°, bevorzugter 5°, nach links und nach rechts nicht, noch bevorzugter ist die maximale Drehung höchstens 3° in jede Drehrichtung.

In Abhängigkeit der Krafteinwirkung und/oder der Drehmomenteinwirkung auf die Vorrichtung kann gemäß dieser Ausführung eine Lenkbewegung des Fahrzeugs hervorgerufen werden. Gemäß einer bevorzugten Ausführungsform ist es vorgesehen, dass jeder Wert der Krafteinwirkung und/oder Drehmomenteinwirkung einem Lenkwinkel des Fahrzeugs zugeordnet ist. Besonders bevorzugt ist die Abhängigkeit zwischen der Krafteinwirkung und/oder der Drehmomenteinwirkung und dem Lenkwinkel linear oder progressiv ausgelegt. Bevorzugt ist es vorgesehen, dass je höher der Wert der Krafteinwirkung und/oder Drehmomenteinwirkung auf die Vorrichtung ist, desto größer ist der Lenkwinkel des Fahrzeugs. Die Abhängigkeit zwischen der Krafteinwirkung und/oder der Drehmomenteinwirkung und dem Lenkwinkel kann beliebig hinterlegt sein und entsprechend mittels einer Steuereinheit umgesetzt oder beliebig neu hinterlegt werden. Durch die Messung der Kräfte bzw. Momente kann auf Federelemente, Rückstellungen, Dämpfungen oder dergleichen verzichtet werden, da die Abhängigkeit elektronisch beschrieben werden kann und keine Bewegung im größeren Sinne der Vorrichtung vorgesehen ist.

Gemäß einer weiteren bevorzugten Ausführungsform ist es vorgesehen, dass mindestens ein Sensor vorgesehen ist, mittels welchem die Krafteinwirkung und/oder Drehmomenteinwirkung messbar ist. Besonders bevorzugt ist es vorgesehen, dass Sensordaten des Sensors an eine Steuereinheit übergeben werden, mittels welcher eine entsprechende Ansteuerung der Lenkung und die Einstellung des Lenkwinkels hervorgerufen wird, bevorzugt mittels entsprechenden Stellgliedern, Aktuatoren oder dergleichen.

Gemäß einer weiteren bevorzugten Ausführungsform ist es vorgesehen, dass zwischen der Vorrichtung und der Armlehne ein elastisches Element, bevorzugt ein elastisch deformierbares Element, angeordnet ist. Das elastische Element kann aus einem Naturkautschuk, einem Gummi, einem Elastomer oder anderen elastischen bzw. elastisch deformierbaren Materialien bestehen. Dadurch, dass die Verbindung zwischen der Vorrichtung und der Armlehne durch ein elastisches Element ausgebildet ist, kann eine geringfügige Drehung der Vorrichtung gegenüber der Armlehne realisiert werden. Weiter bevorzugt können Drehkräfte bzw. Drehmomente aufgenommen werden, welche durch die Kraftwirkung und/oder Drehmomenteinwirkung auf die Vorrichtung auftreten, um eine Beschädigung der Vorrichtung verhindern zu können. Dies entspricht dem Grundgedanken einer im Wesentlichen starren Verbindung zwischen Vorrichtung und Armlehne.

Besonders bevorzugt kann es vorgesehen sein, dass eine Sensoreinheit zum Erkennen einer Hand vorgesehen und ausgebildet ist. Die Sensoreinheit erkennt, ob die Hand in Kontakt mit der ersten Handauflagefläche oder der zweiten Handauflagefläche ist oder ob die Hand auf dem ersten Vorrichtungselement oder dem zweiten Vorrichtungselement abgelegt ist.

Bevorzugt umfasst die Sensoreinheit einen entsprechenden ersten Sensor, welcher in oder auf dem ersten Vorrichtungselement bzw. der Handauflagefläche angeordnet ist, und einen zweiten Sensor, welcher in oder auf dem zweiten Vorrichtungselement bzw. der Handauflagefläche angeordnet ist.

Weiterführende Ausgestaltungen und Ausbildungen der Ausführungsformen untereinander sind auf die weiteren Ausführungen anwendbar und sind untereinander frei kombinierbar, sofern sie nicht gegenläufigen Ausführungsformen entsprechen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: eine Vorrichtung gemäß einer bevorzugten Ausführungsform;
- Fig. 1B: die Vorrichtung gemäß Figur 1A in einer teilweisen Explosionsdarstellung;
- Fig. 1C: die Vorrichtung gemäß Figur 1A in einer vollständigen Explosionsdarstellung;
- Fig. 1D: die Vorrichtung an einer rechten Armlehne;
- Fig. 2A: eine progressive Lenkungsübersetzung der Vorrichtung;
- Fig. 2B: Darstellung einer Rückstellkraft der Vorrichtung;
- Fig. 3: Vorrichtung gemäß einer alternativen Ausführung;
- Fig. 4: Vorrichtung gemäß Figur 3 in einer seitlichen Darstellung;
- Fig. 5: Vorrichtung gemäß einer weiteren alternativen Ausführung.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

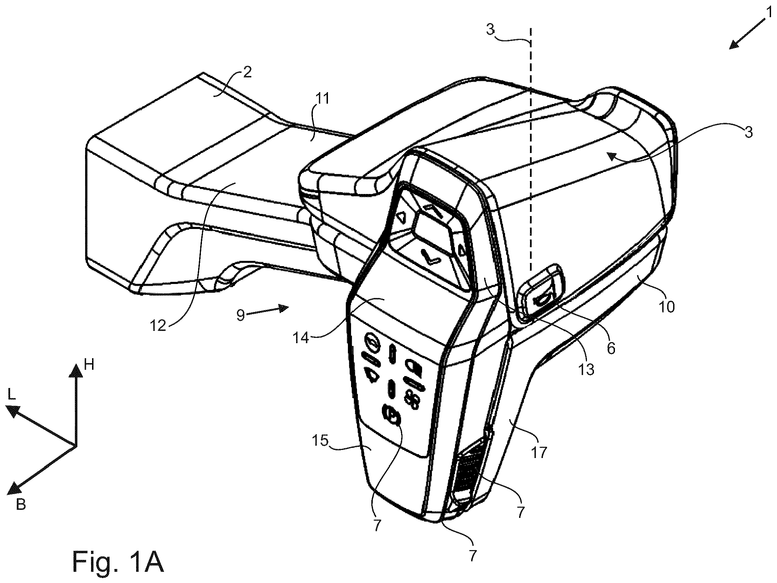

In der Figur 1A ist eine Vorrichtung 1 zur Durchführung einer Lenkbewegung eines Fahrzeugs (hier nicht gezeigt), wobei die Vorrichtung an einer Armlehne 2 eines Fahrzeugsitzes (hier nicht näher dargestellt) angeordnet ist. An einer Armlehne 2 angeordnet kann dabei bedeuten, dass die Vorrichtung 1 direkt an der Armlehne 2 angeordnet ist, oder wie dargestellt, mittels einer Armlehnenverlängerung 11 mit der Armlehne 2 angeordnet ist, wobei bevorzugt die Armlehnenverlängerung 11 gegenüber der Armlehne 2 translatorisch verlagerbar ist, beispielsweise in einer Längsrichtung L oder in einem Winkel zu der Längsrichtung L. Besonders bevorzugt ist es denkbar, dass die Armlehnenverlängerung 11 gegenüber der Armlehne 2 translatorisch verlagerbar und gegenüber der Armlehne 2 drehbar ist. Durch die translatorische Verstellbarkeit ist es möglich, die Vorrichtung 1 entsprechend dem Arm des Fahrers anzupassen.

Weiter ist die Vorrichtung 1 um eine erste Drehachse 3 drehbar gegenüber der Armlehne 2 oder der Armlehnenverlängerung 11.

Die Vorrichtung 1 umfasst dabei ein erstes Vorrichtungselement 4 und ein zweites Vorrichtungselement 5, wobei das zweite Vorrichtungselement 5 an dem ersten Vorrichtungselement 4 fest verbunden angeordnet ist und sich von dem ersten Vorrichtungselement 4 über das erste Vorrichtungselement 4 hinaus nach unten erstreckt, insbesondere in einer Höhenrichtung H gesehen.

Weiter weist das erste Vorrichtungselement 4 eine erste Handauflagefläche 8 und das zweite Vorrichtungselement 5 eine zweite Handauflagefläche 9 auf. Bevorzugt erstreckt sich die erste Handauflagefläche 8 in Längsrichtung L und die zweite Handauflagefläche 9 in Höhenrichtung H.

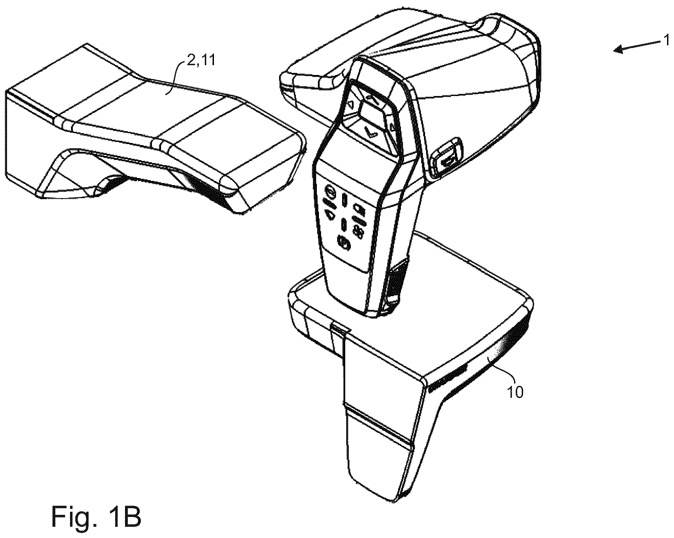

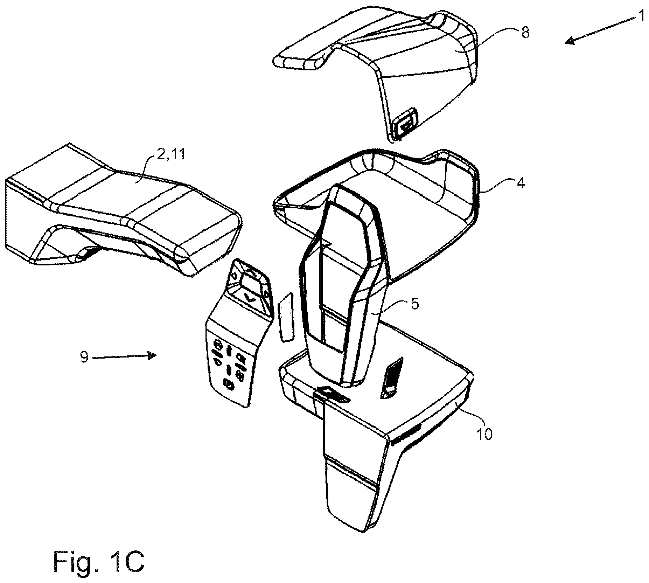

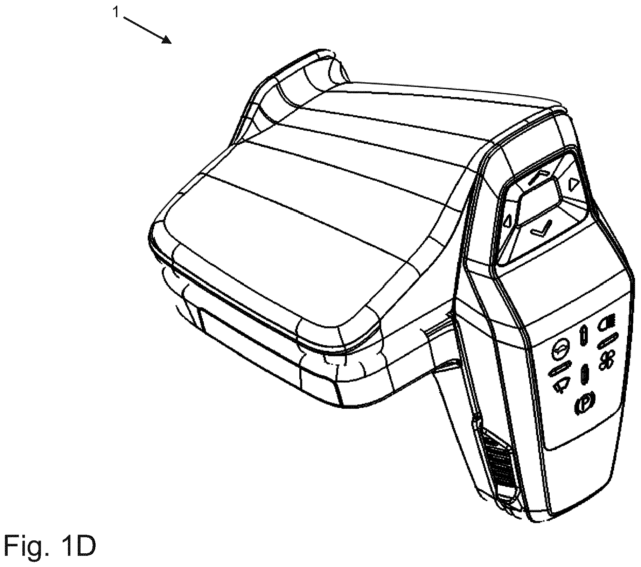

In der vorliegenden Ausführungsform gemäß Figur 1 ist dabei das erste Vorrichtungselement 4 oberhalb, in der Höhenrichtung H gesehen, einer Oberfläche 12 der Armlehne 2 oder der Armlehnenverlängerung 11 angeordnet. Besonders bevorzugt erstreckt sich das zweite Vorrichtungselement 5 von dem ersten Vorrichtungselement 4 über die Oberfläche 12 nach unten, besonders bevorzugt bis unterhalb der Armlehne 2 oder der

Armlehnenverlängerung 11. Wenn sich der Fahrer nach hinten dreht, dreht sich die Hand des Fahrers entsprechend, so dass insbesondere die Finger der Hand von der ersten Handauflagefläche 8 herunterrutschen und die Hand durch die Anordnung der Vorrichtungselemente 4, 5 zueinander sich auf die zweite Handauflagefläche 9 bewegen. Eine Drehung der Vorrichtung 1 ist daher durch Krafteinwirkung auf das zweite Vorrichtungselement 5 möglich.

Besonders bevorzugt ist das zweite Vorrichtungselement 5 derart ausgebildet, dass eine Hand gut abgelegt werden kann, also der Physiologie der Hand angepasst ist.

Bevorzugt weist das zweite Vorrichtungselement 5 einen ersten Bereich 13, einen zweiten Bereich 14 und einen dritten Bereich 15 auf, wobei der erste Bereich 13 mit dem ersten Vorrichtungselement 4 verbunden ist. Weiter bevorzugt ist der dritte Bereich 15 in einer Breitenrichtung B gesehen von dem ersten Bereich 13 beabstandet, so dass dieser dritte Bereich 15 in Breitenrichtung B höherliegend ist. Zwischen dem ersten Bereich 13 und dem dritten Bereich 15 ist der zweite Bereich 14 angeordnet, welche dazu vorgesehen ist, den ersten Bereich 13 und den dritten Bereich 15 miteinander zu verbinden.

Die Erstreckung des zweiten Vorrichtungselements 5 in Höhenrichtung H sowie in Längsrichtung L sind bevorzugt der Handgeometrie angepasst.

Gemäß einer bevorzugten Ausführungsform weist der zweite Bereich 15 eine Vertiefung 16 beziehungsweise einen Vertiefungsbereich 16 auf, welche dafür vorgesehen sind, dass ein Daumen der Hand abgelegt werden kann, so dass eine gute Verbindung des Daumens zu der Vorrichtung 1 vorliegt, insbesondere, wenn die Hand auf der ersten Handauflagefläche 8 liegt. In der Figur 1 ist eine linke Armlehne dargestellt, so dass der Daumen der linken Hand in der Vertiefung 16 zu liegen kommt.

Das zweite Vorrichtungselement 5 weist zumindest daher eine Doppelfunktion auf, nämlich bei einer vorwärts gerichteten als auch bei einer rückwärts gerichteten Fahrstellung.

Weiter bevorzugt ist ein Vorrichtungsträgerelement 10 vorgesehen, welches starr mit der Armlehne 2 oder mit der Armlehnenverlängerung 11 verbunden ist. Besonders bevorzugt ist das erste Vorrichtungselement 4 oberhalb des Vorrichtungsträgerelements 10 angeordnet. Weiter bevorzugt kann es vorgesehen sein, dass ein in sich starr ausgebildeter Fortsatz 17 des Vorrichtungsträgerelements 10 vorgesehen ist, welcher sich nach unten erstreckt und zumindest teilweise komplementär zu dem zweiten Vorrichtungselement 5 ausgebildet ist. Dadurch können ungewollte Krafteinwirkungen auf das zweite Vorrichtungselement 5 verringert werden, beispielsweise durch Bewegungen eines Oberschenkels gegen das zweite Vorrichtungselement 5, welche in Lenkbewegungen resultieren könnten.

Das Vorrichtungsträgerelement 10 ist in der Figur 1B nochmals dargestellt, wobei das Vorrichtungsträgerelement 10 bereits montiert ist. Bevorzugt ist das Vorrichtungsträgerelement 10 derart ausgebildet, dass die Vorrichtung 1 mit dem Vorrichtungsträgerelement 10 drehbar verbindbar ist.

Das erste Vorrichtungselement 4 weist erste Funktionstasten und -anzeigen 6 und das zweite Vorrichtungselement 5 zweite Funktionstasten und -anzeigen 7 auf.

Besonders bevorzugt ist es vorgesehen, dass bei einer Vorwärtsbewegung die ersten Funktionstasten und -anzeigen 6 aktiviert sind und die zweiten Funktionstasten und -anzeigen 7 deaktiviert sind und bei einer Rückwärtsbewegung die ersten Funktionstasten und -anzeigen 6 deaktiviert sind und die zweiten Funktionstasten und -anzeigen 7 aktiviert sind. Hierdurch ist es möglich, dass ungewollte Betätigungen von Funktionstasten und -anzeigen der nicht mit der Hand belegten Vorrichtungselemente 4, 5 möglich sind. Besonders bevorzugt sind die Belegungen der ersten Funktionstasten und -anzeigen 6 zumindest teilweise gleich mit den Belegungen der zweiten Funktionstasten und -anzeigen 7. Insbesondere derartige Belegungen mit Funktionen, die für die Vorwärts- als auch die Rückwärtsbewegung notwendig oder vorgesehen sind, wie beispielsweise eine Hupfunktion oder dergleichen.

Besonders bevorzugt ist eine Erkennungseinheit vorgesehen, welche vorgesehen ist, die Vorwärtsbewegung und eine Rückwärtsbewegung zu erkennen. Bevorzugt werden mittels der Erkennungseinheit die entsprechenden Funktionstasten und -anzeigen 6, 7 aktiviert beziehungsweise deaktiviert. Hiermit kann eine unbeabsichtigte Betätigung vermieden werden.

Alternativ ist es aber auch denkbar, dass alle Funktionstasten und -anzeigen 6, 7 aktiviert sind.

Besonders bevorzugt ist es vorgesehen, dass die Drehbewegung der Vorrichtung 1 mit einem Drehmoment, welches der Drehbewegung entgegenwirkt, behaftet bzw. beaufschlagt ist. Dies ist davon abhängig, dass einerseits mit dem Daumen oder anderen Fingern die Vorrichtung 1 gedreht wird, wobei mittels des Daumens mehr Kraft eingebracht werden kann. Daher kann bei einer Drehung der Vorrichtung 1, welche mit dem Daumen durchgeführt wird, ein höheres Drehmoment als bei einer Drehung der Vorrichtung 1 mit anderen Fingern vorgesehen sein.

In der Figur 1C ist die Vorrichtung 1 nochmals dargestellt, in einer vollständigen Explosionsdarstellung. Es ist zu erkennen, dass die Vorrichtung zum Großteil hohl ausgebildet ist. Vorliegend sind das erste Vorrichtungselement 4 und das zweite Vorrichtungselement 5 als Hohlkörper ausgebildet, wobei die Vorrichtungselemente 4, 5 starr miteinander verbunden sind, beispielsweise aneinander angespritzt oder als ein Teil gespritzt sind. Die jeweiligen Handauflageflächen 8, 9 können als separate Elemente ausgebildet sein, welche mit dem jeweiligen Vorrichtungselement 4, 5 verbunden werden können, beispielsweise angeklipst oder dergleichen, so dass eine leichte Austauschbarkeit gegeben sein kann.

In der Figur 1D ist die Vorrichtung 1 für eine rechtsseitige Armlehne 2 dargestellt, so dass die Position des zweiten Vorrichtungselements 5 gegenüber dem ersten Vorrichtungselement 4 anders ist, um der Person, welche auf dem Fahrzeugsitz sitzt, zugewandt zu sein.

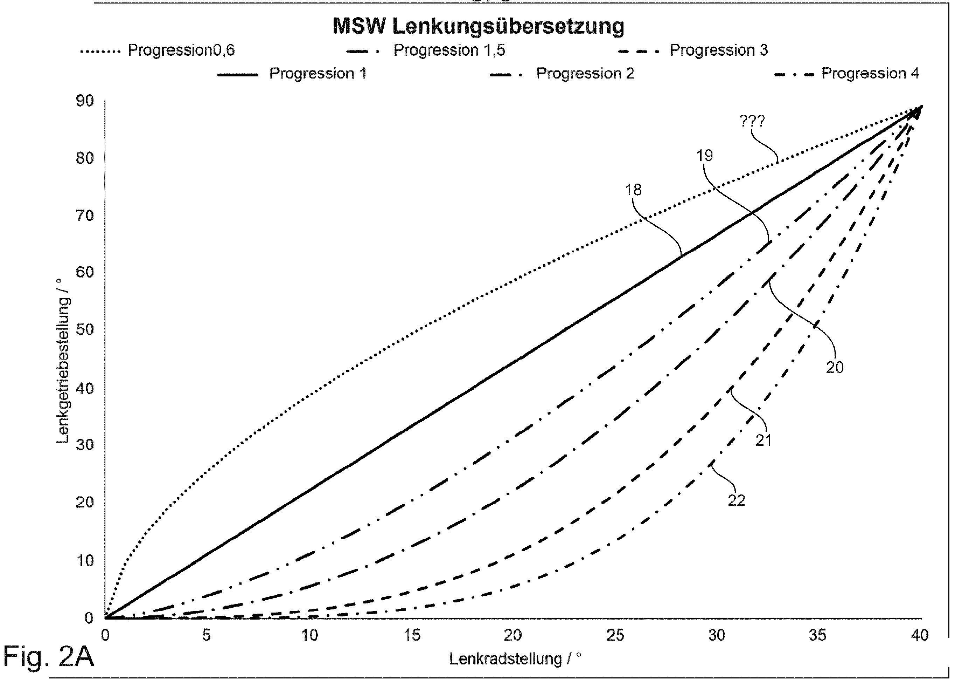

In der Figur 2A sind verschiedene Auslegungen der progressiven Lenkungsübersetzung, also einer Funktion von Drehwinkel zu Lenkwinkel dargestellt. Auf der Abszisse ist der Drehwinkel der Vorrichtung 1 und auf der Ordinate ist der Lenkwinkel dargestellt.

Mit einer ersten Kurve ist zum Vergleich ein linearer Verlauf 18 dargestellt. Mit den weiteren Verläufen sind progressive Verläufe 19, 20, 21, 22 dargestellt, wobei der erste progressive Verlauf 19 eine schwächere Progression aufweist als der zweite progressive Verlauf 20, welcher eine schwächere Progression aufweist als der dritte progressive Verlauf 21, welcher eine schwächere Progression aufweist als der vierte progressive Verlauf 22.

Denkbar wäre es, dass die jeweilige Funktion durch eine entsprechende Potenzfunktion beschrieben ist, bevorzugt mit geraden Exponenten.

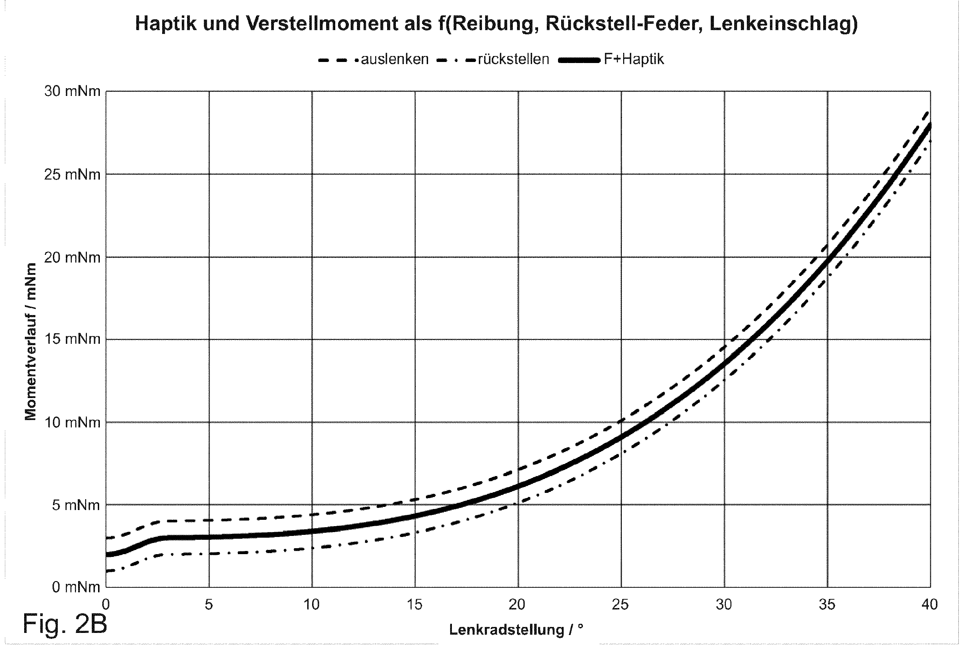

Die Figur 2B zeigt einen beispielhaften Verlauf einer Rückstellkraft.

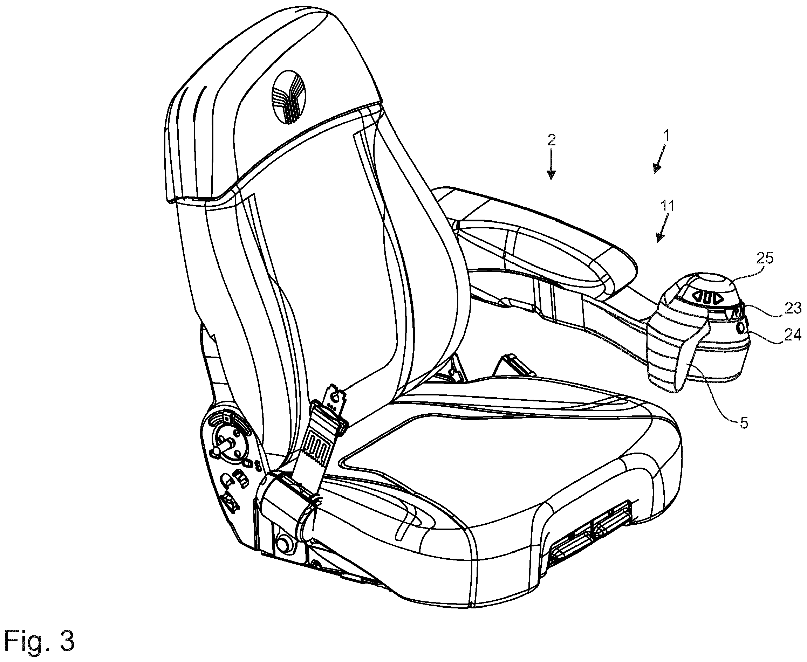

Figur 3 zeigt eine Vorrichtung 1 gemäß einer alternativen Ausführungsform. In Figur 3 sieht man in der perspektivischen Darstellung einen Fahrzeugsitz mit der erfindungsgemäßen Vorrichtung 1 dargestellt. Der Fahrzeugsitz weist eine Rückenlehne und ein Sitzteil auf. Eine Armlehne 2 ist auf der linken Seite angeordnet und hat in ihrem vorderen Bereich eine daran befestigte erfindungsgemäße Vorrichtung 1. Die Vorrichtung 1 umfasst dabei ein drehbares Radelement 23, ein Basisteil 24 und ein Kopfteil 25, wobei das Radelement 23 über dem Basisteil 24 und unterhalb des Kopfteils 25 angeordnet ist.

Weiter ist an dem Radelement 23 das zweite Vorrichtungselement 5 vorgesehen.

Die Vorrichtung 1 ist mit einem armartigen Bauteil bzw. der Armlehnenverlängerung 11 vor und unterhalb der Armlehne 2 an dieser befestigt.

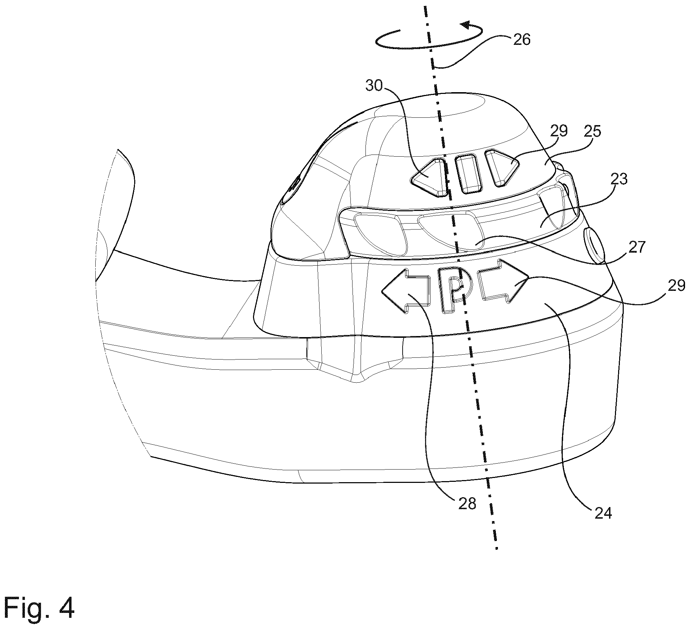

In Figur 4 ist in einer seitlichen Darstellung die Vorrichtung der Figur 3 ohne weitere Armlehne und ohne das zweite Vorrichtungselement 5 dargestellt. Dieser Darstellung ist zu entnehmen, dass die Vorrichtung 1 nicht nur das um die Achse 26 drehbare Radelement 9 mit daran angeordneten Fingereinkerbungen 27 umfasst, in denen die Finger komfortabel abgelegt werde können, um das Radelement 23 zu drehen. Vielmehr ist auch das darunter angeordnete stationäre Basisteil 24 mit zusätzlichen Funktionstasten bzw. Funktionsanzeigen 28, 29 zu sehen. Die Bedienschalter 28, 29 können beispielweise mit dem Daumen der linken Hand bedient werden, um eine Parkstellung einzunehmen bzw. eine Parkbremse zu aktivieren oder zu deaktivieren. Hierfür ist es nicht notwendig, dass die restlichen Finger der linken Hand von dem Radelement 23 weggenommen werden.

Das Kopfteil 10 hat ebenso Funktionsanzeigen und Funktionsbetätigungselemente. Beispielsweise kann ein Blinker des Fahrzeuges durch Betätigungselemente 29, 30 betätigt werden. Diese Betätigungselemente können aber auch dazu dienen, um das Fahrzeug vorwärts und rückwärts zu bewegen.

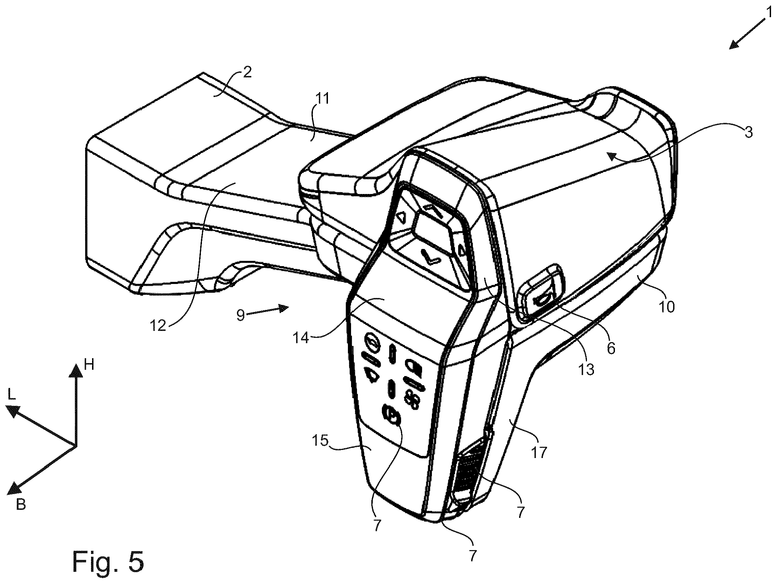

In der Figur 5 ist eine weitere alternative Ausführungsform gezeigt, welche im Wesentlichen der Ausführungsform gemäß Figur 1 entspricht, wobei die Vorrichtung 1 gegenüber der Armlehne 2 im Wesentlichen starr angeordnet ist, also keine oder nur eine sehr geringe Drehung der Vorrichtung 1 möglich ist. Es ist darüber hinaus ein Sensor (hier nicht gezeigt) vorgesehen, welcher dazu vorgesehen und ausgebildet ist, Krafteinwirkungen und/oder Drehmomenteinwirkungen auf die Vorrichtung 1 zu erkennen. Diese Sensordaten können mittels einer Steuereinheit (hier nicht gezeigt) dazu verwendet werden, entsprechende Lenkwinkel des Fahrzeugs einzustellen, beispielsweise durch Aktuatoren, Stellglieder, oder dergleichen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer, in einzelnen oder in unterschiedlichen Figuren gezeigten Merkmalen ergeben können.

### Bezugszeichenliste

- 1: Vorrichtung
- 2: Armlehne
- 3: erste Drehachse
- 4: erstes Vorrichtungselement
- 5: zweites Vorrichtungselement
- 6: erste Funktionstasten und -anzeigen
- 7: zweite Funktionstasten und -anzeigen
- 8: erste Handauflagefläche
- 9: zweite Handauflagefläche
- 10: Vorrichtungsträgerelement
- 11: Armlehnenverlängerung
- 12: Oberfläche
- 13: erster Bereich des zweiten Vorrichtungselements
- 14: zweiter Bereich des zweiten Vorrichtungselements
- 15: dritter Bereich des zweiten Vorrichtungselements
- 16: Vertiefung, Vertiefungsbereich
- 17: Fortsatz
- 18: linearer Verlauf
- 19: erster progressiver Verlauf
- 20: zweiter progressiver Verlauf
- 21: dritter progressiver Verlauf
- 22: vierter progressiver Verlauf
- 23: Radelement
- 24: Basisteil
- 25: Kopfteil
- 26: Achse
- 27: Fingereinkerbung
- 28: Bedienschalter
- 29: Bedienschalter
- 30: Bedienschalter

## Patentansprüche

1. Vorrichtung (1) für Fahrzeuge, insbesondere Gabelstapler, wobei die Vorrichtung (1) zumindest zur Durchführung einer Lenkbewegung des Fahrzeugs ausgebildet ist, wobei die Vorrichtung (1) an einer Armlehne (2) eines Fahrzeugsitzes des Fahrzeugs angeordnet ist,
**dadurch gekennzeichnet, dass**
eine Betätigung der Vorrichtung (1) die Lenkbewegung verursacht, und wobei die Vorrichtung (1)
- ein erstes oberhalb der Armlehne (2) angeordnetes Vorrichtungselement (4), und
- ein zweites Vorrichtungselement (5), welches an dem ersten Vorrichtungselement fest verbunden ist und sich von dem ersten Vorrichtungselement (4) über das erste Vorrichtungselement (4) hinaus nach unten erstreckt,
umfasst, wobei das erste Vorrichtungselement (4) und das zweite Vorrichtungselement (5) dazu vorgesehen und ausgebildet sind, dass eine Hand zumindest teilweise darauf ablegbar ist, wobei bei einer Vorwärtsbewegung des Fahrzeugs die Hand zumindest teilweise auf dem ersten Vorrichtungselement (4) ablegbar ist und bei einer Rückwärtsbewegung des Fahrzeugs die Hand auf dem zweiten Vorrichtungselement (5) zumindest teilweise ablegbar ist.

2. Vorrichtung (1) nach Anspruch 1,
**dadurch gekennzeichnet, dass**
das zweite Vorrichtungselement (5) an einer Innenseite der Armlehne (2) angeordnet ist.

3. Vorrichtung (1) nach Anspruch 1 oder 2,
**dadurch gekennzeichnet, dass**
das erste Vorrichtungselement (4) eine erste Handauflagefläche (8) und das zweite Vorrichtungselement (5) eine zweite Handauflagefläche (9) umfasst.

4. Vorrichtung (1) nach einem der Ansprüche 1 bis 3,
**dadurch gekennzeichnet, dass**
die Vorrichtung (1) teilweise oder ganz gegenüber der Armlehne (2) höhenverstellbar ist.

5. Vorrichtung (1) nach einem der Ansprüche 1 bis 4,
**dadurch gekennzeichnet, dass**
an dem ersten Vorrichtungselement (4) erste Funktionstasten und -anzeigen (6) und an dem zweiten Vorrichtungselement (5) zweite Funktionstasten und -anzeigen (7) angeordnet sind.

6. Vorrichtung (1) nach Anspruch 5,
**dadurch gekennzeichnet, dass**
zumindest eine Funktion der Funktionstasten und -anzeigen des ersten Vorrichtungselementes (4) und des zweiten Vorrichtungselementes (5) gleich ist, und wobei die ersten Funktionstasten und -anzeigen (6) des ersten Vorrichtungselementes (4) nur bei einer Vorwärtsbewegung und die zweiten Funktionstasten und -anzeigen (7) des zweiten Vorrichtungselements (5) nur bei einer Rückwärtsbewegung aktiv sind.

7. Vorrichtung (1) nach einem der Ansprüche 1 bis 6,
**dadurch gekennzeichnet, dass**
die Vorrichtung (1) eine Sensoreinheit umfasst, wobei die Sensoreinheit zum Erkennen einer Hand vorgesehen und ausgebildet ist, und zum Erkennen, ob die Hand mit der ersten Handauflagefläche oder der zweiten Handauflagefläche oder die Hand auf dem ersten Vorrichtungselement (4) oder dem zweiten Vorrichtungselement (5) abgelegt ist.

8. Vorrichtung (1) nach einem der Ansprüche 1 bis 7,
**dadurch gekennzeichnet, dass**
das zweite Vorrichtungselement (5) einen ersten Bereich (13), einen zweiten Bereich (14) und einen dritten Bereich (15) umfasst, wobei der erste Bereich (13) mit dem ersten Vorrichtungselement (4) fest verbunden ist, und der dritte Bereich (15) in einer Breitenrichtung (B) gesehen von dem ersten Bereich (13) beabstandet ist, und wobei der zweite Bereich (14) dazu vorgesehen ist, den ersten Bereich (13) und den dritten Bereich (15) miteinander zu verbinden.

9. Vorrichtung (1) nach einem der Ansprüche 1 bis 8,
**dadurch gekennzeichnet, dass**
ein Vorrichtungsträgerelement (10) vorgesehen ist, welches starr mit der Armlehne (2) verbunden ist und wobei das erste Vorrichtungselement (4) oberhalb des Vorrichtungsträgerelements (10) angeordnet ist.

10. Vorrichtung (1) nach Anspruch 9,
**dadurch gekennzeichnet, dass**
das Vorrichtungsträgerelement (10) einen starr ausgebildeten Fortsatz (17) aufweist, welcher sich von dem Vorrichtungsträgerelement (10) nach unten erstreckt und zumindest teilweise komplementär zu dem zweiten Vorrichtungselement (5) ausgebildet ist.
